# EUROPÄISCHE PATENTSCHRIFT

(11) **EP 0 470 365 B1**
(45) Veröffentlichungstag und Bekanntmachung des Hinweises auf die Patenterteilung: **28.09.1994**
(21) Anmeldenummer: 91110989.0
(22) Anmeldetag: 03.07.1991
(51) Int. Cl.: F01N 3/28, F01N 3/02

(54) **Filter**
Filter
Filtre

(30) Priorität: 13.07.1990 DE 4022321
(43) Veröffentlichungstag der Anmeldung: 12.02.1992
(73) Patentinhaber: Schwäbische Hüttenwerke GmbH, D-73414 Aalen (DE)
(72) Erfinder: Härle, Hans A., Dipl.-Ing., W-7085 Bopfingen (DE)
(74) Vertreter: Lorenz, Werner, Dipl.-Ing.

(56) Entgegenhaltungen:
- EP-A- 0 325 111
- EP-A- 0 428 037
- DE-A- 3 228 325

## Beschreibung

Die Erfindung betrifft einen Filter zum Abscheiden von Verunreinigungen aus Abgasen, insbesondere aus den Abgasen eines Verbrennungsmotores, mit einem Filterkörper, der aus einer Vielzahl von formgepreßten hochtemperaturbeständigen und gesinterten Filterplatten aus Metallpulver, Metallspänen, Metallfasern oder einem Gemisch daraus besteht, die über - bzw. hintereinander - angeordnet und durch Abstandshalter auf Abstand voneinander gehalten eine Vielzahl von Strömungskanälen zwischen sich bilden, wobei die Strömungskanäle zur Bildung von Eingangs- und Ausgangskanälen jeweils auf einer Seite offen und auf der anderen Seite geschlossen sind, und wobei die zwischen den Eingangs- und Ausgangskanälen liegenden Wände der Filterplatte Filterflächen darstellen.

Insbesondere in den Abgasen eines Dieselmotores sind eine Vielzahl von Rußteilchen vorhanden, die zu Problemen führen, wenn man neben einer Beseitigung des Rußes aus den Abgasen gleichzeitig auch noch weitere Verunreinigungen oder schädliche Abgasbestandteile durch katalytische Wirkungen entfernen möchte.

So ist z.B. eine gute katalytische Funktion der Umwandlung von Kohlenmonoxid und Kohlenwasserstoffen durch katalytische Werkstoffe bei einer Rußbeladung des Filters nicht möglich.

Bekannt ist es deshalb, zuerst die Abgase von den Rußteilchen durch einen Filter zu reinigen, und dann anschließend die so gereinigten Abgase über einen dahinter geschalteten Katalysator zu führen. Nachteilig bei dieser Anordnung ist jedoch, daß sie sehr aufwendig und damit auch sehr unwirtschaftlich ist.

In den älteren Anmeldungen P 39 01 609.9 (EP-A-0 379 032) und P 39 37 809.8 (EP-A-0 428 037) der gleichen Anmelderin sind bereits Filter, insbesondere zur Entfernung von Rußteilchen vorgeschlagen worden, die aus einer Vielzahl von formgepreßten, hochtemperaturbeständigen und gesinterten Filterplatten der eingangs erwähnten Art bestehen.

In der EP-A-0 325 111 A2 ist eine Filter- und Nachverbrennungseinrichtung für Abgase, insbesondere von Brennkraftmaschinen, offenbart. Diese Einrichtung weist sogenannte Einfassungsmäntel auf, die mit einer katalytischen Beschichtung zur Konvertierung gasförmiger Schadstoffe versehen sind. Die Einfassungsmäntel dienen dazu, die Filtermatten, die in einer Wickelbauweise zu einem Filter gewickelt werden sollten, einzufassen. Hierzu sind gelochte Metallbänder vorgesehen, die sowohl in den Eingangs- als auch in den Ausgangskanälen angeordnet sind und direkt bzw. jeweils vollflächig mit je einer Seite an den Filtermatten anliegen.

Nachteilig bei dieser Ausgestaltung und bei dem mit einem derartigen Filter durchgeführten Verfahren ist jedoch, daß die katalytische Wirkung bzw. der Wirkungsgrad der Einfassungsmäntel nur beschränkt ist. Insbesondere bei Dieselmotoren setzen sich Rußpartikel an den Oberflächen der Einfassungsmäntel an, worunter der Wirkungsgrad leidet bzw. dessen katalytische Wirkung im Laufe der Zeit verloren geht. Die Einfassungsmäntel befinden sich teilweise bzw. vollständig noch auf der Seite vor der Filterung, d.h. sie werden von ungereinigten Abgasen mit den entsprechend darin sich befindenden Verunreinigungen angeströmt.

Ein weiterer Nachteil der in dieser Druckschrift offenbarten Filtervorrichtung ist, daß die Ausgestaltung, die Filtergröße und damit auch dessen Einsatz und Wirksamkeit festliegen.

Der vorliegenden Erfindung liegt nunmehr die Aufgabe zugrunde, einen Filter dieser Art zu schaffen bzw. derart zu verbessern, daß sowohl eine Entfernung von Rußteilchen als auch eine katalytische Funktion zur Beseitigung bzw. Umwandlung von weiteren Verunreinigungen und schädlichen Bestandteilen in den Abgasen in einer einzigen Filtereinheit möglichst ohne gegenseitige nachteilige Beeinflussung möglich wird.

Erfindungsgemäß wird diese Aufgabe dadurch gelöst, daß in die Ausgangskanäle ein oder mehrere Einlagen eingesetzt sind, die aus katalytischen Werkstoffen bestehen, oder die mit katalytischen Werkstoffen beschichtet sind, wobei die Einlagen als Katalysatorplatten ausgebildet sind, die sich parallel zur Strömungsrichtung erstrecken und die beidseitig von den vorgereinigten Abgasen umströmt sind.

Durch die erfindungsgemäße Ausbildung der Filterplatte und deren Anordnung zueinander ist es in überraschender Weise möglich geworden, katalytisch wirkende Einlagen jeweils direkt in die Ausgangskanäle zu integrieren und so eine gesonderte Filtereinheit einzusparen. An der Filterfläche können sich wie bisher Verunreinigungen niederschlagen. So kann an bzw. in den Filterflächen bzw. den Filterwänden zwischen den Eingangs- und Ausgangskanälen in herkömmlicher Weise eine Rußkonversion stattfinden. Nach Durchgang durch die die Eingangskanäle von den Ausgangskanälen trennenden Filterwände und damit nach einer Rußumwandlung können die katalytischen Wirkungen der Einlagen zur Entfernung der übrigen durch Katalysatorwirkung entfernbaren bzw. umwandelbaren Bestandteilen, wie z.B. Kohlenmonoxid und Kohlenwasserstoff verwendet werden.

Durch die erfindungsgemäße Ausgestaltung werden ja die Einlagen von bereits gereinigten Abgasen überströmt, wodurch teure Beschichtungsverfahren oder hintereinander geschaltete Systeme eingespart werden können.

In einfacher Weise kann man die Einlagen in den Ausgangskanälen als sich parallel zur Strömungsrichtung erstreckende Katalysatorplatten ausbilden, die sich vorzugsweise über die gesamte Länge der Ausgangskanäle erstrecken.

Auf diese Weise strömen die Abgase vollflächig auf ihrem Weg zum Auslaß an den Oberflächen der Katalysatorplatten entlang, womit für die chemische Reaktion entsprechend lange Zeit zur Verfügung steht.

Unter Verwendung der Abstandshalter zwischen den einzelnen Filterplatten, durch die die Kanäle gebildet werden, lassen sich die Einlagen bzw. Katalysatorplatten auf einfache Weise in die Ausgangskanäle integrieren. So kann man hierzu die Einlagen bzw. Katalysatorplatten zwischen die Rippen, Sicken oder dergleichen von aufeinander stoßenden Rippen, Sicken oder dergleichen von benachbart zueinander liegenden Filterplatten anordnen.

Wenn in einfacher Weise vorgesehen ist, daß die Filterplatten wellenartig ausgebildet sind, können die Einlagen bzw. Katalysatorplatten jeweils zwischen Wellenbergen und Wellentälern von benachbart zueinander liegenden Filterplatten mit aufeinander stoßenden Wellenbergen und Wellentälern eingelegt sein.

In einer sehr vorteilhaften und nicht naheliegenden Ausgestaltung der Einlagen bzw. Katalysatorplatten kann vorgesehen sein, daß diese auf ihren Oberflächen strukturiert sind.

Durch diese Ausgestaltung steht für die chemischen Reaktionen zum einen eine größere Oberfläche und damit eine längere Reaktionszeit zur Verfügung und zum anderen kann durch eine entsprechende Formgebung der Strukturierung ein Verwirbelungseffekt und damit ebenfalls eine bessere Reaktion erreicht werden.

Für die Strukturierung sind die verschiedensten Ausführungsformen möglich. In einfacher Weise kann man z. B. entsprechende Stanzungen vornehmen und hierbei z.B. Erhöhungen und/oder Vertiefungen, Noppen, Rippen, Wellenberge und Wellentäler und dergleichen einformen.

Eine sehr vorteilhafte Herstellungsart des erfindungsgemäßen Filters kann darin bestehen, daß die Einlagen bzw. Katalysatorplatten auf ihren Oberflächen mit Erhöhungen und/oder Vertiefungen versehen sind.

Auf diese Weise kann praktisch in einem einzigen Arbeitsgang und damit sehr preisgünstig ein kombinierter Filter zur Entfernung von Ruß und zur Entfernung von weiteren Abgasbestandteilen durch katalytische Wirkung geschaffen werden.

Die Verbindung der einzelnen Filterplatten zusammen mit den Einlagen bzw. Katalysatorplatten für eine Einheit kann auf verschiedene Weise erfolgen.

So können z.B. formgepreßte Filterplatten und Einlagen, die mit katalytisch wirkenden Pulvern beschichtet sind, oder Katalysatorplatten in einem gemeinsamen Sintervorgang, wobei das Pulver auf den Einlagen verschmilzt, zu einer Einheit zusammengesintert werden.

Es ist jedoch auch möglich, formgepreßte und bereits gesinterte Filterplatten, zwischen denen die katalytisch beschichteten Einlagen bzw. die Katalysatorplatten eingelegt sind, zu einer Einheit zu verschweißen.

Ebenso können die einzelnen formgepreßten und gesinterten Filterplatten mit den eingelegten Einlagen bzw. Katalysatorplatten umfangsseitig durch mechanische Verbindungsglieder derart miteinander verbunden werden, daß sich die Eingangs- und Ausgangskanäle in der gewünschten Weise ergeben.

Nachfolgend ist ein Ausführungsbeispiel der Erfindung anhand der Zeichnung prinzipmäßig beschrieben.

Es zeigt:
- Fig. 1: einen vereinfachten Längsschnitt durch den erfindungsgemäßen Filter (ausschnittsweise);
- Fig. 2: ausschnittsweise einen Querschnitt in vergrößerter Darstellung.

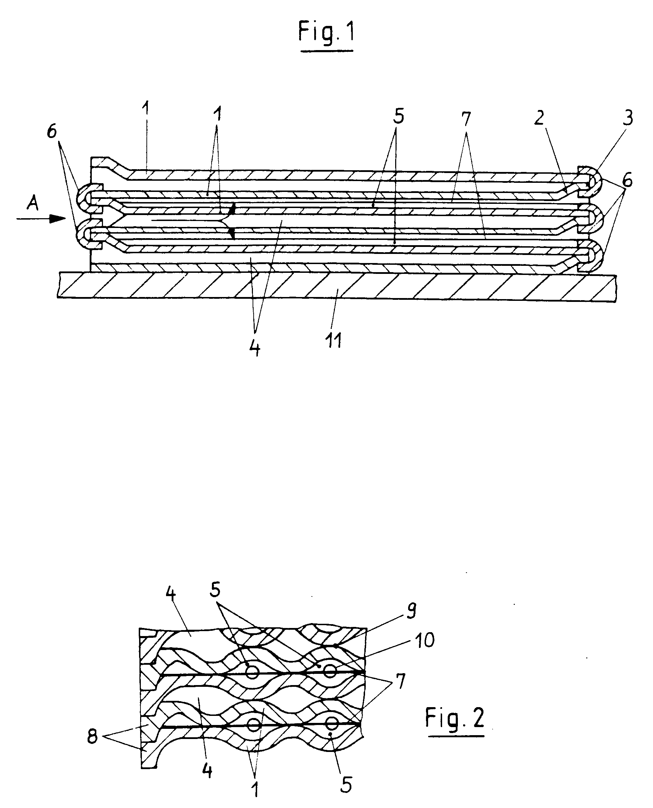

Der Filter ist aus einer Vielzahl von formgepreßten, hochtemperaturbeständigen Filterplatten 1 aufgebaut, die übereinander angeordnet sind. Die Filterplatten 1 können gesintert sein und besitzen eine wellenförmige Oberfläche, und zwar derart, daß sich in Strömungsrichtung (siehe Pfeil A in der Fig. 1) Strömungskanäle ergeben. Dabei bilden jeweils die Erhöhung der Wellen 9 gleichzeitig die Abstandshalter für die benachbart dazu liegende Filterplatte 1, um jeweils zwischen einzelnen Filterplatten die gewünschten Strömungskanäle zu bilden (siehe Fig. 2).

Die Filterplatten 1 sind identisch ausgebildet und besitzen jeweils an einem Ende eine Stirnseite, die eine direkte und gerade Verlängerung der Filterfläche darstellt, während sie auf der anderen Seite eine Abknickung 2 aufweist, die in einem geraden Endstück 3 ausläuft, die parallel zur Oberfläche der Filterplatte liegt.

Selbstverständlich ist es jedoch auch möglich, daß sich an beiden Enden Abknickungen befinden.

Zum Herstellen eines Filters wird die gewünschte Anzahl von Filterplatten 1 übereinander gelegt, und zwar derart, daß jeweils eine Stirnseite mit einem geraden Teil und eine Stirnseite mit der Abknickung 2 und dem Endstück aufeinander liegen. Auf diese Weise werden jeweils zwischen benachbart liegenden Filterplatten 1 nicht nur Strömungskanäle gebildet, sondern jeweils abwechselnd werden durch die Abknickung 2 bzw. die Endstücke 3 Abschlüsse auf einer Seite der Kanäle erreicht.

Wie ersichtlich, werden auf diese Weise Eingangskanäle 4 geschaffen, die - in der Zeichnung links - zuströmseitig offen und rechts geschlossen sind, während dazwischenliegende Ausgangskanäle 5 auf der linken Seite, d.h. eingangsseitig, geschlossen und auf der rechten Seite, d.h. ausgangsseitig, offen sind.

Gleichzeitig mit dem Übereinanderlegen der Filterplatten 1 werden jedoch zwischen diese jeweils nach zwei übereinander gelegten Filterplatten 1 Katalysatorplatten 7 als Einlagen eingelegt, und zwar derart, daß sie in den Ausgangskanälen 5 liegen.

Die Katalysatorplatten 7 erstrecken sich in Strömungsrichtung über die gesamte Länge und Breite der Ausgangskanäle 5, wobei sie auf den Wellenbergen und Wellentälern von benachbart zueinander liegenden Filterplatten aufliegen.

Zur Bildung einer Einheit und zur Abdichtung der einzelnen Filterplatten 1 an ihren Eingangs- bzw. Ausgangsseiten können nun die Filterplatten 1 in einen gemeinsamen Sintervorgang zusammen mit den Katalysatorplatten 7 miteinander verbunden werden. Ebenso können sie an ihren Enden auch miteinander verschweißt oder wie in der älteren Anmeldung P 39 37 809.8 beschrieben und hier beispielsweise in Fig. 1 dargestellt durch mechanische Mittel miteinander verbunden werden. Die mechanischen Mittel können z.B. federnde Klammern 6 sein, die die Enden der Filterplatten 1 zusammendrücken. Eine andere Verbindungsmöglichkeit kann auch durch Falze an den Enden den Filterplatten erreicht werden, die entsprechend umgefalzt werden.

Im Betrieb werden Rußbestandteile an den Filterflächen bzw. in den porösen Wänden der Filterplatten 1 zwischen den Eingangskanälen 4 und den Ausgangskanälen 5 abgeschieden, wobei eine Rußkonversion bzw. Rußvergasung stattfindet. Nach Durchgang durch die Filterwände zwischen den Eingangskanälen 4 und den Ausgangskanälen 5 können die auf diese Weise vorgereinigten Abgase beidseitig entlang der Katalysatorplatten 7 in den Ausgangskanälen 5 zum Ausgang strömen, wobei die Umwandlung von weiteren schädlichen Abgasbestandteilen aufgrund der katalytischen Wirkung der Katalysatorplatten 7 erfolgt.

Wie aus der vergrößerten Darstellung in der Fig. 2 ersichtlich ist, sind die Katalysatorplatten 7 an ihren beiden Oberflächen strukturiert. Mit dem Bezugszeichen "10" sind prinzipmäßig entsprechende Erhöhungen bzw. Noppen dargestellt.

Als Material für die Katalysatorplatte bzw. für dessen Beschichtung können bekannte katalytische Werkstoffe verwendet werden, wie z.B. Platin, Vanadium, Kobalt, Rhodium und dergleichen.

Die seitliche Abdichtung der Filterplatten 1 kann z.B. durch eine entsprechende Ausgestaltung mit Dichtlippen 8 erfolgen, die als stufenförmige Absätze ausgebildet sein können. Dabei kann ebenfalls eine Abdichtung durch eine Verschweißung, eine Versinterung oder durch ein mechanisches Aufeinanderdrücken erfolgen.

Mit dem Bezugszeichen "11" ist ein Teil des Filtergehäuses dargestellt, in das die Filterplatten 1 eingebaut sind.

Als Ausgangsmaterial für die Filterplatten 1 können Metallpulver, Metalldrähte Metallfasern oder Metallspäne verwendet werden. Dabei ist lediglich darauf zu achten, daß die Wände eine genügend große Porosität besitzen, was entweder durch grobes Metallpulver oder noch besser durch ein Geflecht oder Gewirr von Metalldrähte oder Metallspäne bzw. Metallfasern erreicht wird.

Ebenso läßt sich hierfür als Ausgangsmaterial ein Gewebe oder Gestrick aus Metallfasern oder Metalldrähten verwenden, die zusammengesintert werden. Ein derartiges Verfahren ist z.B. in der älteren Anmeldung P 39 08 581.3 beschrieben.

Ein derartiges Gewebe oder Gestrick läßt sich z.B. auch als Band ausbilden, daß dann in mehreren Windungen spiralförmig gewickelt wird, wobei dann durch Abstandshalter in dem Band die einzelnen Wicklungen auf Abstand voneinander gehalten werden und auf diese Weise Strömungskanäle gebildet werden. Die Strömungskanäle brauchen dann lediglich abwechselnd an den Stirnseiten abgedichtet werden, damit man Eingangs- und Ausgangskanäle erhält, so daß die Abgase den auf diese Weise gebildeten zylindrischen Filterkörper in axialer Richtung durchströmen können. Ein derartiger Filterkörper ist z.B. in der älteren Anmeldung P 39 01 609.9 beschrieben. Auch bei einem derartigen Filterkörper lassen sich Einlagen bzw. Katalysatorplatten problemlos in den Ausgangskanälen anordnen. Hierzu ist es lediglich erforderlich, während der spiralförmigen Wicklung des Bandes bei dessen Herstellung gleichzeitig Einlagen mit einzuwickeln bzw. derart einzuschieben, daß sie sich jeweils in den Ausgangskanälen befinden.

## Patentansprüche

1. Filter zum Abscheiden von Verunreinigungen aus Abgasen, insbesondere aus den Abgasen eines Verbrennungsmotores, mit einem Filterkörper, der aus einer Vielzahl von formgepreßten hochtemperaturbeständigen und gesinterten Filterplatten (1) aus Metallpulver, Metallspänen, Metallfasern oder einem Gemisch daraus besteht, die über - bzw. hintereinander - angeordnet und durch Abstandshalter (9) auf Abstand voneinander gehalten eine Vielzahl von Strömungskanälen (4,5) zwischen sich bilden, wobei die Strömungskanäle zur Bildung von Eingangs- und Ausgangskanälen (4 bzw. 5) jeweils auf einer Seite offen und auf der anderen Seite geschlossen sind, und wobei die zwischen den Eingangs- und Ausgangskanälen liegenden Wände der Filterplatte Filterflächen darstellen,
**dadurch gekennzeichnet,** daß in die Ausgangskanäle (5) ein oder mehrere Einlagen (7) eingesetzt sind, die aus katalytischen Werkstoffen bestehen, oder die mit katalytischen Werkstoffen beschichtet sind, wobei die Einlagen als Katalysatorplatten ausgebildet sind, die sich parallel zur Strömungsrichtung erstrecken, und die beidseitig von den vorgereinigten Abgasen umströmt sind.

2. Filter nach Anspruch 1,
**dadurch gekennzeichnet,** daß sich die Katalysatorplatten (7) wenigstens annähernd über die gesamte Länge und Breite der Ausgangskanäle (5) erstrecken.

3. Filter nach Anspruch 1 oder 2,
**dadurch gekennzeichnet,** daß die Abstandshalter durch in die Filterplatten (1) eingeformte Rippen, Sicken oder dergleichen (9) gebildet sind, und daß die Einlagen bzw. Katalysatorplatten (7) jeweils zwischen Rippen, Sicken und dergleichen (9) angeordnet sind, die von aufeinanderstoßenden Rippen, Sicken oder dergleichen von benachbart zueinander liegenden Filterplatten (1) gebildet sind.

4. Filter nach Anspruch 3,
**dadurch gekennzeichnet,** daß die Filterplatten (1) wellenartig ausgebildet sind und die Einlagen bzw. Katalysatorplatten (7) jeweils zwischen Wellenbergen und Wellentälern liegen, die durch direkt aufeinanderliegende Filterplatten (1) gebildet sind.

5. Filter nach einem der Ansprüche 1 bis 4,
**dadurch gekennzeichnet,** daß die Einlagen bzw. Katalysatorplatten (7) auf ihren Oberflächen strukturiert sind.

6. Filter nach Anspruch 5,
**dadurch gekennzeichnet,** daß die Einlagen bzw. Katalysatorplatten (7) auf ihren Oberflächen mit Erhöhungen und/oder Vertiefungen (10) versehen sind.

7. Verfahren zur Herstellung eines Filters nach einem der Ansprüche 1 bis 6,
**dadurch gekennzeichnet,** daß bei der Herstellung des Filterkörpers Katalysatorplatten (7) derart zwischen die Filterplatten (1) eingelegt werden, daß diese in den Ausgangskanälen (5) liegen, und daß die Katalysatorplatten (7) mit den Filterplatten (1) zusammen zu einer Einheit verbunden werden.

8. Verfahren nach Anspruch 7,
**dadurch gekennzeichnet,** daß formgepreßte Filterplatten (1), zwischen die die Katalysatorplatten (7) eingelegt werden, gemeinsam mit den Einlagen bzw. Katalysatorplatten (7) zusammengesintert werden.

9. Verfahren nach Anspruch 7,
**dadurch gekennzeichnet**, daß formgepreßte und gesinterte Filterplatten (1), zwischen denen die Katalysatorplatten (7) eingelegt werden, mit den Katalysatorplatten (7) durch Schweißen miteinander verbunden werden.

10. Verfahren nach Anspruch 7,
**dadurch gekennzeichnet**, daß formgepreßte und gesinterte Filterplatten (1), zwischen denen die Katalysatorplatten (7) eingelegt werden, mit den Katalysatorplatten (7) durch mechanische Verbindungsglieder (6) miteinander verbunden werden.

## Claims

1. Filter for removing impurities from exhaust gases, in particular from the exhaust gases of an internal combustion engine, comprising a filter body consisting of a plurality of compression moulded, high-temperature resistant, sintered filter plates (1) consisting of metal powder, metal chips, metallic fibres or a mixture thereof, which, arranged on top of one another or behind one another and kept at a distance from one another by spacers (9), form between them a plurality of flow channels (4, 5), the flow channels being open at one end and closed at the other end in order to form inlet and outlet channels (4 and 5), and the walls of the filter plate situated between the inlet and outlet channels constituting filter surfaces, characterised in that one or more inserts (7) consisting of catalytic materials or coated with catalytic materials are inserted into the outlet channels (5), the inserts being designed as catalyst plates which extend parallel to the flow direction and around both sides of which the precleaned exhaust gases flow.

2. Filter according to claim 1, characterised in that the catalyst plates (7) extend at least approximately over the entire length and width of the outlet channels (5).

3. Filter according to claim 1 or claim 2, characterised in that the spacers are formed by ribs, beads or the like (9) moulded into the filter plates (1) and that the inserts or catalyst plates (7) are each arranged between ribs, beads and the like (9) which are formed by adjacent ribs, beads or the like of filter plates (1) situated adjacent to one another.

4. Filter according to claim 3, characterised in that the filter plates (1) have a wavelike form and the inserts or catalyst plates (7) are each situated between crests and troughs of the waves which are formed by filter plates (1) situated directly on top of one another.

5. Filter according to one of claims 1 to 4, characterised in that the inserts or catalyst plates (7) are structured on their surfaces.

6. Filter according to claim 5, characterised in that the inserts or catalyst plates (7) are provided on their surfaces with prominences and/or recesses (10).

7. Process for the manufacture of a filter according to one of claims 1 to 6, characterised in that, during the manufacture of the filter body, catalyst plates (7) are inserted between the filter plates (1) in such a manner that they are situated in the outlet channels (5) and that the catalyst plates (7) are connected to the filter plates (1) to form one unit.

8. Process according to claim 7, characterised in that compression moulded filter plates (1) between which the catalyst plates (7) are inserted are sintered together with the inserts or catalyst plates (7).

9. Process according to claim 7, characterised in that compression moulded, sintered filter plates (1) between which the catalyst plates (7) are inserted are connected to one another by welding together with the catalyst plates (7).

10. Process according to claim 7, characterised in that compression moulded, sintered filter plates (1) between which the catalyst plates (7) are inserted are connected to one another by mechanical links (6) together with the catalyst plates (7).

## Revendications

1. Filtre pour séparer des polluants de gaz d'échappement, notamment de gaz d'échappement d'un moteur à combustion interne, comportant un corps filtrant qui se compose d'une pluralité de plaques filtrantes réfractaires formées à la presse et frittées (1), faites de poudres métalliques, de copeaux métalliques, de fibres métalliques ou d'un mélange de ceux-ci, où lesdites plaques sont disposées les unes sur ou derrière les autres et maintenues à distance l'une de l'autre par des moyens d' écartement (9) pour former entre elles une pluralité de canaux d'écoulement (4, 5) qui sont respectivement ouverts d'un côté ou fermés de l'autre côté pour former des canaux d'entrée (4) et des canaux de sortie (5), et où les parois des plaques filtrantes situées entre les canaux d'entrée et de sortie constituent des surfaces filtrantes, **caractérisé** en ce que les canaux de sortie (5) contiennent une ou plusieurs garnitures (7) faites ou revêtues de matériaux catalytiques, lesdites garnitures étant agencées en plaques de catalyse qui s'étendent parallèlement à la direction d'écoulement et qui sont léchées sur leurs deux faces par les gaz préalablement épurés.

2. Filtre selon la revendication 1, **caractérisé** en ce que les plaques de catalyse (7) s'étendent au moins approximativement sur toute la longueur et la largeur des canaux de sortie (5).

3. Filtre selon la revendication 1 ou 2, **caractérisé** en ce que les moyens d'écartement sont formés par des nervures, des moulures ou des parties analogues (9) ménagées sur les plaques filtrantes (1) et en ce que les garnitures ou plaques de catalyse (7) sont disposées chacune entre des nervures, moulures ou parties analogues (9) qui sont formées par des nervures, moulures ou parties analogues, butant l'une contre l'autre, des plaques filtrantes mutuellement adjacentes (1).

4. Filtre selon la revendication 3, **caractérisé** en ce que les plaques filtrantes (1) ont une forme ondulée et en ce que les garnitures ou plaques de catalyse (7) se trouvent chacune entre des crêtes et des creux des ondes, formés par les plaques filtrantes (1) directement superposées.

5. Filtre selon l'une des revendications 1 à 4, **caractérisé** en ce que les garnitures ou plaques de catalyse (7) sont structurées en surface.

6. Filtre selon la revendication 5, **caractérisé** en ce que les garnitures ou plaques de catalyse (7) comportent des protubérances et/ou des creux (10) sur leurs surfaces.

7. Procédé de fabrication d'un filtre selon l'une des revendications 1 à 6, **caractérisé** en ce que, lors de la fabrication du corps filtrant, on intercale des plaques de catalyse (7) entre les plaques filtrantes (1) de telle manière qu'elles se trouvent dans les canaux de sortie (5) et en ce qu'on lie ensemble les plaques de catalyse (7) et les plaques filtrantes (1) pour former un élément unitaire.

8. Procédé selon la revendication 7, **caractérisé** en ce que des plaques filtrantes (1) formées à la presse, entre lesquelles sont intercalées les plaques de catalyse (7), sont frittées ensemble en commun avec les garnitures ou plaques de catalyse (7).

9. Procédé selon la revendication 7, **caractérisé** en ce que des plaques filtrantes (1) formées à la presse et frittées, entre lesquelles sont intercalées les plaques de catalyse (7), sont fixées les unes aux autres avec les plaques de catalyse (7) par soudage.

10. Procédé selon la revendication 7, **caractérisé** en ce que des plaques filtrantes (1) formées à la presse et frittées, entre lesquelles sont intercalées les plaques de catalyse (7), sont fixées les unes aux autres avec les plaques de catalyse (7) par des organes mécaniques de fixation (6).
